# EUROPEAN PATENT SPECIFICATION

(11) **EP 0 510 532 B1**
(45) Date of publication and mention of the grant of the patent: **15.11.1995**
(21) Application number: 92106616.3
(22) Date of filing: 16.04.1992
(51) Int. Cl.: B60Q 1/26

(54) **Combination lamp for automobile**
Lampeneinheit für Fahrzeuge
Ensemble de lampe pour véhicule

(30) Priority: 23.04.1991 JP 28070/91 U
(43) Date of publication of application: 28.10.1992
(73) Proprietor: ICHIKOH INDUSTRIES LIMITED, Shinagawa-ku Tokyo 141 (JP)
(72) Inventor: Akiyama, Ichirou, Isehari-Shi Kanagawa (JP)
(74) Representative: Grünecker, Kinkeldey, Stockmair & Schwanhäusser Anwaltssozietät

(56) References cited:
- DE-A- 2 421 597

## Description

The present invention relates to a combination lamp for use on an automobile.

In the recent automotive industry, the profile of the lamps used on a car body, in particular, the outer surface form of their front lens, is an important esthetic factor and there is a trend that a great consideration is given to this factor in designing the general style of a car. For this reason, combination lamps are widely used in which illumination lamps such as headlight, fog light, cornering light, etc. as well as signal lights such as direction indicator light (all these lights will be referred to as "lighting units" hereinafter) are disposed together in a single lamp assembly. Some of such combination lamps have the lamp housings formed separately for a plurality of lighting units, while other combination lamps have the lamp housings formed integrally with one another. However, the font lenses or cover lenses for such various lighting units are formed as integrally molded into a single front lens. The outer surface of this single front lens is formed so smooth as to continuously form a part of a streamline-shaped car body, while the inner surface is so formed as to have corresponding lens portions for the various lighting units. However, at the boundary where the lamp housings are adjoining each other, there exists a gap through which the light beams freely passes. DE-A-2 421 597 shows a barrier arrangement for a combination lamp assembly.

Because of such structure, the light beam emitted from any one of the lighting units goes beyond the boundary between these lighting units into the other, possibly causing a false luminous phenomenon. For example, in a combination lamp in which a fog light and direction indicator light are provided as juxtaposed, the light beam emitted from the bulb the fog light when the latter is turned on travels beyond the boundary between these lights and leaks into the direction indicator light, possibly causing a false luminous phenomenon inside there. On the contrary, the light beam emitted from the bulb of the direction indicator light when the latter is turned on is likely to go beyond the boundary and leak into the fog light.

To reduce such light leak from one of the lighting units into the other, it has been proposed to dispose two light barriers as spaced opposite to each other at the boundary where the lamp housings of the lighting units adjoin each other, the upper ends of both the light barriers being disposed in contact with or as near the inner surface of the front lens as possible.

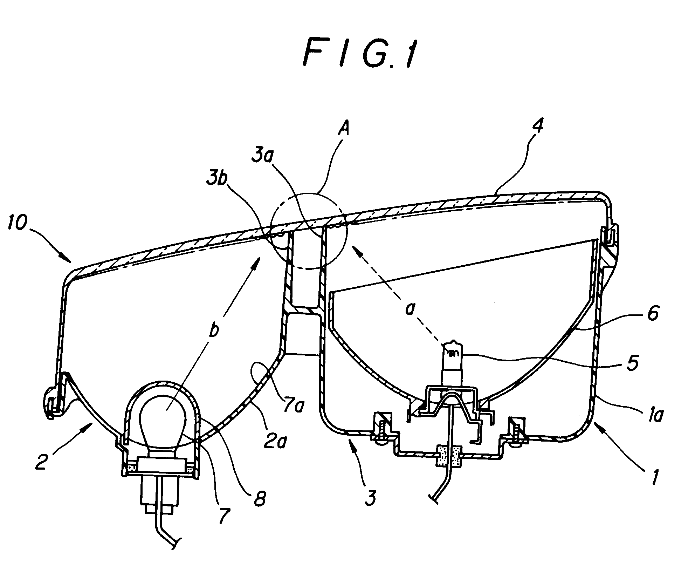

Fig. 1 shows an example conventional combination lamp of this type. In Fig. 1, the entire combination lamp is indicated with a reference numeral 10. The reference numeral 1 indicates a fog light as illumination lamp and 2 a direction indicator light as signal lamp. The fog light 1 is composed of a lamp unit including a bulb 5, and a reflector 6 which reflects the light beams emitted from the bulb 5 in a predetermined direction, the lamp unit and reflector 6 being disposed within a lamp housing 1a. The direction indicator light 2 consists of a bulb 7 covered with a colored cap 8 and a reflector 7a provided to reflect light beams colored through the colored cap 8 in a predetermined direction, the reflector 7a itself forming a part of a lamp housing 2a. The lamp housings 1a and 2a are formed integrally with each other and form together a part of the single lamp housing 3.

There are disposed at the boundary between the lamp housing 1a for the fog light 1 and the lamp housing 2a for the direction indicator light 2 light barriers 3a and 3b as spaced opposite to each other, the upper ends of which are disposed as near the inner surface of the front lens as possible.

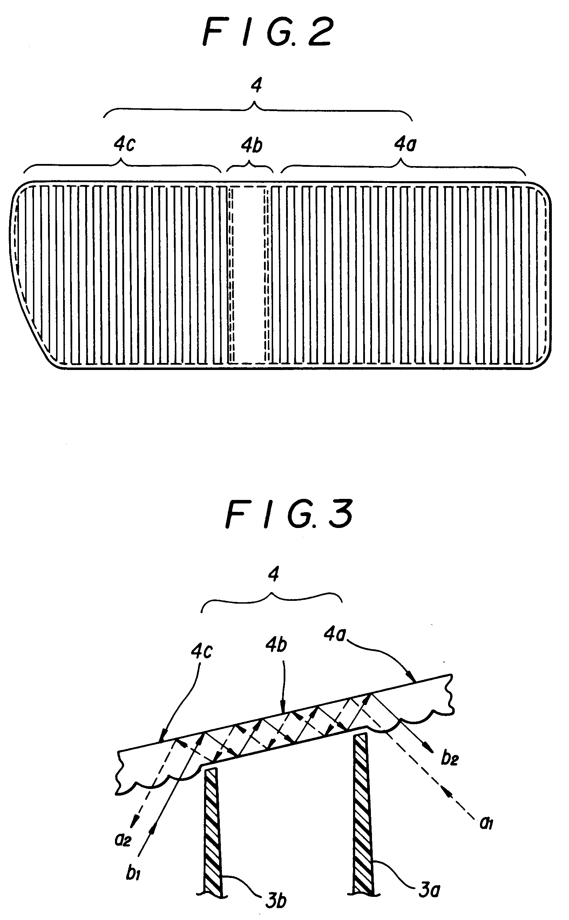

Fig. 2 is a front view of the conventional combination lamp, showing a front lens 4 as a whole. The reference numeral 4a indicates a lens portion corresponding to the reflector 6 of the fog light 1, 4a a boundary between the fog light 1 and direction indicator light 2, that is, a portion corresponding to the space between the light barriers 3a and 3b, and 4c a lens portion corresponding to the reflector 7a of the direction indicator light 2. In this conventional combination lamp, the lens 4a for the fog light and the lens 4c for the direction indicator light 4c are composed of cylindrical prisms, respectively. The boundary 4b is transparent and formed flat, not like any prism.

The combination lamp having such two light barriers is also disadvantageous in that the light leak from the fog light into the direction indicator light or vice versa cannot be completely eliminated.

Referring now to Fig. 3, such problems of the conventional combination lamps will be further discussed below. As seen, the light incident from the fog light 1 upon the boundary 4b in the direction of arrow a₁ is led as repeatedly subject to total reflection and then goes into the direction indicator light 2 in the direction of arrow a₂. Thus, when the fog light 1 is turned on, the direction indicator light 2 will appear as if it emitted a light, which will possibly dazzle the driver of any other car running opposite to this car. This is an extreme disadvantage of the conventional combination lamps.

Likewise, the incident light (indicated with the arrow b₁) from the direction indicator light 2 is led as repeatedly subject to total reflection in the flat boundary 4b and leaks into the illumination lamp side in the direction of arrow b₂, thus resulting in a similar false luminous phenomenon. The false luminous phenomenon caused by the light leak from the illumination lamp such as fog light or the like into the signal lamp such as direction indicator light or the like will possibly dazzle the driver of any other car running opposite to this car as if the signal lamp such as direction indicator light or the like were illuminated although it is really not, which is a great disadvantage of such conventional combination lamp.

Accordingly, the present invention has an object to overcome the above-mentioned drawbacks of the conventional combination lamps by providing an improved combination lamp in which the light leak from one lighting unit into another can be completely shut off, thereby ensuring the driver's safe driving.

The above object can be attained by providing a combination lamp having, according to the present invention, as integrally formed between two lens portions formed on a front lens correspondingly to adjoining lighting units, respectively, a prism which reflects and refracts the light beam incident from at least one of the adjoining lighting units upon the boundary in such directions that the light beams are not positively led into the other.

The above-mentioned prism comprises a reflecting face which reflects backwardly the light beams, respectively, emitted from two adjoining lighting units, respectively, and refracting/reflecting surfaces which refract a part of the reflected light beams into a space defined by two light barriers and also reflect the rest of the reflected light beams in such directions that they are led to outside the front lens. Preferably, the reflecting surface is defined by an extension of a flat outer surface of the front lens and the refracting/reflecting surfaces are formed each as an inclined surface forming a predetermined angle with respect to each of the light beams reflected on the reflecting surface, whereby the light leak from one of the lighting units to the other can be completely shut off.

Furthermore, a reflecting film may be formed on the refracting/reflecting surfaces of the prism, whereby the light beams from both the lighting units can be forwardly incident upon the boundary between them and all the light beams reflected backwardly on the reflecting surface can be reflected in such directions that they are led to outside the front lens.

These and other objects and advantages of the present invention will be better understood from the ensuing description made of an embodiment of the present invention with reference to the drawings.
Fig. 1 is a sectional view of a conventional combination lamp;
Fig. 2 is a front view of the combination lamp;
Fig. 3 is a schematic sectional view of the boundary separating the illumination lamp and signal lamp from each other in the combination lamp, explaining the light leak and false luminous phenomenon taking place at the boundary; and
Fig. 4 is a schematic sectional view of the essential construction of one embodiment of combination lamp according to the present invention.

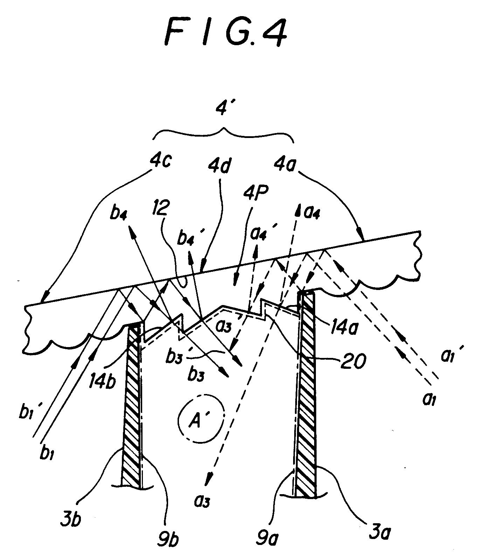

The embodiment of combination lamp according to the present invention will be described below with reference to Fig. 4. Fig. 4 is a schematic sectional view corresponding to Fig. 3. Other construction than the essential construction of the combination lamp is substantially the same as that shown in Fig. 1.

In Fig. 4, the reference numeral 4' indicates a front lens, 4c a portion corresponding to the reflector 6 of the fog light 1 that is the same as or similar to that in a conventional combination lamp, and 4c a portion corresponding to the reflector 7a of the direction indicator light 2. Each of the portions 4a and 4c has a cylindrical lens formed on the inner side thereof. The reference numeral 4d indicates a portion corresponding to a space defined by a boundary A' between the fog light 1 and direction indicator light 2, that is, a space defined by the light barriers 3a and 3b. This portion 4d has formed integrally therewith a prism 4p as an optical element.

The prism 4p has a flat outer surface, that is, a reflecting surface 12 to reflect backwardly light beams emitted from the bulbs of the fog light 1 and direction indicator light 2, respectively, and incident upon the boundary 4d of the front lens 4'. This reflecting surface 12 is formed as an extension of the outer surface of the portion 4a of the front lens 4' corresponding to the reflector 6 of the fog light 1 as well as of the outer surface of the portion 4c corresponding to the reflector 7a of the direction indicator light 2. Light beam incident at a larger angle than a predetermined one with respect to a plane normal to the reflecting surface 12 is totally reflected there and directed backwardly. Furthermore, the prism 4p has refracting/reflecting surfaces 14a and 14b which refract a part of the light beam reflected at the reflecting surface 12 toward a space defined by the two light barriers 3a and 3b and also reflect the rest of the reflected light beam in such a direction that it can be led to outside the front lens.

In this embodiment, these refracting/reflecting surfaces include two refracting/reflecting surfaces 14a for the light beam emitted from the fog light 1 and two refracting/reflecting surfaces 14b for the light beam emitted from the direction indicator light 2.

The light beams emitted radially from the fog light 1 and direction indicator light 2, respectively, and incident upon the corresponding cylindrical lens portions 4a and 4c from the directions of arrows a₁ and b₁, respectively, are totally reflected at the reflecting surface 12, and then they are incident upon the refracting/reflecting surfaces 14a and 14b. The light beams incident upon the cylindrical lens portions 4a and 4c, respectively, from the directions of arrows a₁' and b₁' are reflected at the flat lower end faces of the cylindrical lens portions which the upper ends of the light barriers 3a and 3b abut, respectively, and further are subject to total reflection at the reflecting surface 12 again. Thereafter, the light beams are incident upon the adjoining refracting/reflecting surfaces 14a and 14b, respectively.

Each of the refracting/reflecting surfaces should preferably be inclined approximately 90° with respect to the light beams subjected to total reflection at the reflecting surface 12 and directed backward. Fig. 4 shows only the light beams incident upon the reflecting surface 12, not refracted through the cylindrical lens portions 4a and 4c. Strictly speaking, however, since the incident angles of light beams emitted radially from the fog light 1 and direction indicator light 2, respectively, and incident upon the cylindrical lens portions 4a and 4c are determined depending upon the size and position of each light source, the geometrical shape, index of refraction, etc. of the cylindrical lens portions and also because all the light beams are theoretically different in incident angle from one another, all the light beams reflected at the reflecting surface 12 are directed in different angles. Since it is not possible to incline each of the refracting/reflecting surfaces so as to form an angle of about 90° with respect to all the light beams, the inclination angle of them is set approximately 90° with respect to an averaged incident direction of the light beams totally reflected at the reflecting surface 12.

Hence, the most of the light beams emitted from the bulb of the fog light 1 in the direction of arrow a₁ or a₁' and incident upon the respective refracting/reflecting surfaces 14a, respectively, are refracted or transmitted through them in the direction of arrow a₃ or a₃' and led into the boundary space A', while only a small rest is reflected at the refracting/reflecting surfaces 14a in such a direction that it can be led to outside the front lens as indicated with arrow a₄ or a₄'. Likewise, the most of the light beams emitted from the bulb of the direction indicator light 2 and incident upon the respective refracting/reflecting surfaces 14b is refracted or transmitted through them in the direction of arrow b₃ or b₃' and led into the boundary space A', while only a small rest is reflected at the refracting/reflecting surfaces 14a in such a direction that it can be led to outside the front lens as indicated with arrow b₄ or b₄'.

Fig. 4 shows two refracting/reflecting surfaces 14a and 14b for each of the fog light 1 and direction indicator light 2, respectively. However, the number of refracting/reflecting surfaces is not limited to the one in this embodiment, but one or more refracting/reflecting surfaces 14 may be provided for each of these lights, or the number of such surfaces for one of these lights may be different from that for the other.

As indicated with a chain line, a black coating may be applied to inner walls 9a and 9b, opposite to each other, of the light barriers 3a and 3b, respectively, facing the boundary space A' to effectively absorb the light beams led into the boundary space A'.

Also, a reflecting film 20 indicated with dash line may be formed by evaporation on the refracting/reflecting surfaces 14a and 14b of the prism 4p. In this case, all the light beam reflected at the reflecting surface 12 may be led to outside the front lens in the directions of arrows a₄ and a₄', and b₄ and b₄'.

In the foregoing, an embodiment of combination lamp consisting of one fog light and one direction indicator light has been described. However, the present invention is not limited to such type of combination lamp but applicable to such a combination lamp as well as to a combination lamp consisting of lighting units in any other type of combination, such as one head lamp and one fog lamp, one head lamp and one turn signal lamp or one corner lamp and one turn signal lamp. Of course, it is possible to apply the present invention to a combination lamp consisting of two or more lighting units as provided together in combination.

## Claims

1. A combination lamp, comprising a lamp housing (3) for a plurality of lighting units (1, 2) and which is opened at the front (4) thereof; a front lens (4') covering the front opening of said lamp housing and having a lens portion (4a, 4c) for each of said lighting units (1, 2); and a plurality of light barriers (3a, 3b) disposed at a boundary (4b) between two adjacent ones of said plurality of lighting units within said lamp housing and which extend nearly in parallel with the respective optical axes of said lighting units (1, 2), characterized in that
said combination lamp further comprises a prism (4P) integrally formed between two lens portions (4a, 4c) for said adjoining lighting units (1, 2) and which reflects and refracts the light beam incident from at least one of said adjoining lighting units (1, 2) upon said boundary (4b) in such directions, that the light beams are not positively led into said other lighting unit (1, 2).

2. A combination lamp as set forth in Claim 1, wherein said prism (4P) has a first reflecting surface (12) at which the light beams incident upon said boundary are subject to total reflection, and a second reflecting surface (14a, 14b) to reflect and lead the thus-reflected light beams to the outside of said front lens (4').

3. A combination lamp as set forth in Claim 1, wherein said prism (4P) has a reflecting surface (12) at which the light beams incident upon said boundary are subject to total reflection, and refracting/reflecting surfaces (14a, 14b) by which the reflected light beams are partially led toward a space (A') defined by said two light barriers (3a, 3b) and the rest of said reflected light beams is led to the outside of said front lens.

4. A combination lamp as set forth in Claim 2, wherein a reflecting film (20) is formed on said refracting/reflecting surface (14a, 14b) to reflect toward the outside of said front lens (4') all the light beams reflected on said reflecting surfaces (14a, 14b).

## Patentansprüche

1. Kombinatinsleuchte mit einem Lampengehäuse (3) für eine Anzahl von Leuchteneinheiten (1,2), welches an seiner Vorderseite (4) geöffnet ist; einer Frontlinse (4'), welche die Frontöffnung des Lampengehäuses (3) abdeckt und einen Linsenabschnitt (4a,4c) für jede der Leuchteneinheiten (1,2) umfaßt; und einer Anzahl von Lichtbarrieren (3a,3b), welche in einem Grenzbereich (4b) zwischen zwei zueinander benachbarten Leuchteneinheiten (1,2) in dem Lampengehäuse angeordnet sind, und welche sich im wesentlichen parallel zur jeweiligen optischen Achse der entsprechenden Leuchteneinheit (1,2) erstrecken, **dadurch gekennzeichnet,** daß die Kombinationsleuchte des weiteren umfaßt, ein Prisma (4P), das integral zwischen den beiden Linsenabschnitten (4a,4c) jener zueinander benachbarter Leuchteneinheiten (1,2) ausgebildet ist, und welches das von wenigstens einer der beiden benachbarten Leuchteneinheiten (1,2) auf den Grenzbereich (4b) einfallende Licht reflektiert und bricht in derartige Richtungen, daß die Lichtstrahlen nicht in die andere Leuchteneinheit (1,2) geleitet werden.

2. Kombinationsleuchte nach Anspruch 1, **dadurch gekennzeichnet,** daß das Prisma (4P) eine erste reflektierende Oberfläche (12) aufweist, an welcher Lichtstrahlen, welche auf jenen Grenzbereich auftreffen, einer Totalreflexion unterlaufen, und eine zweite reflektierende Oberfläche (14a,14b) aufweist, um die derart reflektierten Lichtstrahlen zur Außenseite der Frontlinse (4') hin zu reflektieren und zu leiten.

3. Kombinationsleuchte nach Anspruch 1, **dadurch gekennzeichnet,** daß das Prisma (4P) eine reflektierende Oberfläche (12) aufweist, an welcher die auf jenen Grenzbereich auftreffenden Lichtstrahlen einer Totalreflexion unterlaufen, und ferner Brechungs/Reflexionsflächen (14a,14b) aufweist, durch welche die reflektierten Lichtstrahlen teilweise zu einem Raum (A') hingeleitet werden, welcher zwischen zwei Lichtbarrieren (3a,3b) definiert ist, und daß der verbleibende Teil der reflektierten Lichtstrahlen zur Außenseite der Frontlinse geleitet wird.

4. Kombinationsleuchte nach Anspruch 2, **dadurch gekennzeichnet,** daß ein reflektierender Film (20) auf der Brechungs/Reflexionsoberfläche (14a,14b) ausgebildet ist, um zur Außenseite der Frontlinse (4') hin all jene Lichtstrahlen zu reflektieren, welche an den reflektierenden Oberflächen (14a,14b) reflektiert werden.

## Revendications

1. Ensemble combiné de feux, comprenant un boîtier de feux (3) pour une multiplicité d'unités d'éclairage (1, 2) et qui est ouvert au niveau de son avant (4), une lentille frontale (4') recouvrant l'ouverture frontale de ce boîtier de feux et ayant une portion de lentille (4a, 4c) pour chacune desdites unités d'éclairage (1, 2), et une multiplicité d'écrans anti-lumière (3a, 3b) disposés au niveau d'un frontière (4b) entre deux unités d'éclairage adjacentes de ladite multiplicité d'unités d'éclairage à l'intérieur dudit boîtier de feux, et qui s'étendent pratiquement parallèlement aux axes optiques respectifs desdites unités d'éclairage (1, 2), caractérisé en ce que
ledit ensemble combiné de feux comprend en outre un prisme (4p) formé d'un seul tenant entre deux portions de lentille (4a, 4c) pour lesdites unités d'éclairage adjacentes (1, 2) et qui réfléchit et réfracte le faisceau lumineux tombant d'au moins l'une des unités d'éclairage adjacentes (1, 2) sur ladite frontière (4b) dans des directions telles que les faisceaux lumineux ne sont pas positivement conduits dans l'autre unité d'éclairage (1, 2).

2. Ensemble combiné de feux selon la revendication 1, dans lequel ledit prisme (4p) a une première surface réfléchissante (12) au niveau de laquelle les faisceaux lumineux tombant sur ladite frontière sont soumis à une réflexion totale, et une deuxième surface réfléchissante (14a, 14b) pour réfléchir et conduire les faisceaux lumineux ainsi réfléchis à l'extérieur de ladite lentille frontale (4').

3. Ensemble combiné de feux selon la revendication 1, dans lequel ledit prisme (4p) a une surface réfléchissante (12) au niveau de laquelle les faisceaux lumineux tombant sur ladite frontière sont soumis à une réflexion totale, et des surfaces réfractives/réfléchissantes (14a, 14b) par lesquelles les faisceaux lumineux réfléchis sont partiellement conduits en direction d'un espace (A') défini par lesdits deux écrans anti-lumière (3a, 3b) et le reste desdits faisceaux lumineux réfléchis est conduit à l'extérieur de ladite lentille frontale.

4. Ensemble combiné de feux selon la revendication 2, dans lequel un film réfléchissant (20) est formé sur lesdites surfaces réfractives/réfléchissantes (14a, 14b) pour réfléchir vers l'extérieur de ladite lentille frontale (4') tous les faisceaux lumineux réfléchis sur lesdites surfaces réfléchissantes (14a, 14b).
